# FASCICULE DE BREVET EUROPEEN

(11) **EP 3 596 010 B1**
(45) Date de publication et mention de la délivrance du brevet: **25.11.2026**
(21) Numéro de dépôt: 18713327.7
(22) Date de dépôt: 12.03.2018
(51) Int. Cl.: C01B 39/02, C01B 39/14

(54) **PROCÉDÉ DE SYNTHÈSE EN CONTINU DE CRISTAUX DE ZÉOLITHE**
VERFAHREN ZUR KONTINUIERLICHEN SYNTHESE VON ZEOLITHKRISTALLEN
METHOD FOR THE CONTINUOUS SYNTHESIS OF ZEOLITE CRYSTALS

(30) Priorité: 17.03.2017 FR 1752196
(43) Date de publication de la demande: 22.01.2020
(73) Titulaire: Arkema France, 92800 Puteaux (FR)
(72) Inventeur: NICOLAS, Serge, 64170 LACQ (FR); LUTZ, Cécile, 64290 Gan (FR); DUBOIS, Jean-Luc, 69390 Millery (FR); LECOMTE, Yvan, 64370 Arthez de Béarn (FR)
(86) Numéro de dépôt international: PCT/FR2018/050568
(87) Numéro de publication internationale: WO 2018/167414

(56) Documents cités:
- WO-A1-98/02384
- WO-A2-2005/066068
- FR-A1- 2 398 698
- US-A- 4 368 174

## Description

La présente invention concerne le domaine des zéolithes, plus précisément le domaine de la synthèse industrielle de cristaux de zéolithe et plus particulièrement celui de la synthèse industrielle en continu de cristaux de zéolithe.

La synthèse de cristaux de zéolithe (ou plus simplement « synthèse de zéolithe » dans la suite du présent exposé) est réalisée de façon conventionnelle dans l'industrie en réacteur « batch » agité de grande taille, généralement avec chauffage du gel de synthèse et/ou du milieu réactionnel par injection de vapeur et/ou par double enveloppe. La préparation du gel de synthèse consiste à mélanger une solution d'aluminate de sodium avec une solution de silicate de sodium, ce mélange pouvant être effectué soit dans une installation en amont du réacteur de cristallisation soit directement dans le réacteur de cristallisation.

Afin d'améliorer le procédé conventionnel de cristallisation des zéolites en batch, des études ont été publiées sur le développement de procédé de synthèse continu. Ces travaux visent à s'affranchir ou tout au moins amoindrir les inconvénients liés aux procédés batch et notamment à réduire la taille des installations nécessaires à la synthèse, à diminuer en conséquence la dépense énergétique et à améliorer la régularité de la qualité de la production.

Quelques travaux décrivent des procédés dits « en continu » de synthèses de zéolithes, que l'on peut classer en trois catégories :
1) le milieu de synthèse est d'abord préparé dans un réacteur batch de façon conventionnelle puis ce réservoir de gel alimente en continu un réacteur de cristallisation ; dans ce cas, on parle alors de procédé « semi-continu » puisque une partie du procédé est réalisée en réacteur batch (voir par exemple Jingxi Ju et coll, « Continuous synthesis of zeolite NaA in a microchannel reactor », Chemical Engineering Journal, 116, (2006), 115-121 ; Shumovskii et coll., « Continuous process for the production of zeolite in pulsation apparatus », Chemical and Petroleum Engineering, 31 (5-6), (1995), 253-256 ; Zhendong Liu et coll., « Ultrafast Continuous-flow synthesis of crystalline microporous AIPO4-5 », Chem. Mater., 2-7, (2014) ; US 4848509 ou encore US 6773694) ;
2) le milieu de synthèse est préparé en continu à l'aide d'un mélangeur cisaillant puis est cristallisé en réacteur batch de façon classique (voir par exemple les documents EP0149929 et BE 869156) ;
3) le milieu de synthèse est préparé en continu et alimente un réacteur en continu afin de réaliser la cristallisation.

Les deux premières catégories ne sont donc pas à proprement parler des procédés « continus » puisqu'une partie au moins de la synthèse est réalisée en batch.

Parmi les travaux de la troisième catégorie, il ressort que les conditions de synthèse en continu ne sont pas décrites de façon toujours très précise, de sorte qu'il est difficile, sinon impossible de les reproduire. En particulier, les conditions précises de conduite du procédé ne permettent pas de savoir si et comment les risques d'encrassement des installations peuvent être efficacement évités.

Récemment, les travaux de Zhendong Liu et coll., dans « Continuous flow synthesis of ZSM-5 zeolite on the order of seconds », parus dans PNAS, 113 (50), 13 décembre 2016, 14267-14271, proposent un vibrateur à air pour minimiser les problèmes de précipitation et de blocage lors de la préparation de zéolithe ZSM-5 (type MFI). WO9802384 propose également un procédé de préparation d'une zéolite en continu et comprend une série de réacteurs disposés en série et reliés l'un à l'autre.

Il reste cependant que l'enseignement de l'art antérieur concernant les synthèses de zéolithes en continu n'est pas sans poser de nombreux problèmes. En effet, une des contraintes du procédé en continu est par exemple liée au temps de cristallisation. De nombreuses études, réalisées aujourd'hui sur la synthèse de zéolithe LTA, montrent que la durée de cristallisation est de quelques heures à 100°C, ou bien quelques secondes seulement, pour la partie cristallisation de ZSM-5, à l'aide d'eau sous pression, à température extrêmement élevée, cf. Zhendong Liu et coll., *ibid..*

Il est par conséquent connu qu'un point de vigilance dans la mise en oeuvre d'un procédé de synthèse en continu contenant des solides (comme c'est le cas dans la synthèse des zéolithes) est le risque d'encrassement des réacteurs, qui sont généralement et le plus souvent des réacteurs tubulaires, par l'accumulation de solides pouvant impliquer une dérive du procédé et des coûts de maintenance élevés.

Or, et comme exposé dans l'art antérieur, la mise en oeuvre d'un procédé continu de synthèse de zéolithes, par rapport à un procédé batch, devrait permettre d'effectuer des gains en dépense d'énergie, de construire des unités plus compactes donc avec des investissements moindres et de produire des cristaux de qualité plus régulière, notamment grâce à une maîtrise plus facile des paramètres de fabrication.

Cependant, on ne peut que constater que les procédés en continu ne se sont pas particulièrement développés jusqu'à présent dans la synthèse des zéolithes. Ceci est probablement dû notamment au risque d'encrassement (comme expliqué plus haut) en raison de la présence de solides dans le milieu réactionnel (soit solides amorphes présents dès le départ dans le gel de synthèse, soit solides cristallins en fin de synthèse, après cristallisation), aux difficultés de concilier temps de cristallisation et qualité des cristaux formés. Ces difficultés risquent d'être amplifiées si des tailles de cristaux supérieures à la centaine de nanomètres sont recherchées.

Il reste par conséquent un besoin pour un procédé de synthèse de zéolithes en continu pouvant s'affranchir des inconvénients précités.

Ainsi, la présente invention concerne un procédé continu de synthèse de zéolithe, ledit procédé étant réalisé totalement en continu, c'est-à-dire dans lequel un gel est préparé en continu puis cristallisé en continu sans phase transitoire en batch.

Il a en effet été découvert de manière surprenante que l'application de paramètres spécifiques permet de réduire, voire de faire disparaître tout risque d'encrassement du système, permettant ainsi la préparation de zéolithes en continu, et ce, de manière industrielle, c'est-à-dire à grande échelle, afin de pouvoir satisfaire les besoins d'un marché toujours grandissant. D'autres avantages encore apparaîtront à la lumière de la description de l'invention qui suit.

Ainsi, la présente invention a pour premier objet un procédé de préparation de cristaux de zéolithe en continu, comprenant au moins les étapes suivantes :
a) fourniture en continu d'une composition susceptible de générer des cristaux de zéolithe ;
b) introduction en continu de ladite composition dans au moins une zone réactionnelle de cristallisation soumise à des moyens d'agitation, conférant à la dite composition un écoulement caractérisé par un nombre de Reynolds relatif Reᵣ compris entre 40 et 50000, de préférence compris entre 40 et 25000, de préférence encore entre 70 et 5000, typiquement entre 100 et 2000, bornes incluses,
c) récupération en continu des cristaux formés à l'étape b) selon un écoulement caractérisé par un nombre de Reynolds net Reₙ compris entre 1 et 1500, de préférence entre 1 et 1000, de préférence encore entre 5 et 500, typiquement entre 10 et 200, bornes incluses.

Le nombre de Reynolds net (Reₙ) est calculé en utilisant la formule suivante : ${Re}_{n} = mv . V . D / μ ,$ où mv représente la masse volumique du milieu réactionnel (en kg.m⁻³), V représente la vitesse de déplacement du milieu réactionnel en fût vide (ou « empty bed » en langue anglaise) exprimée en m.s⁻¹, D représente le diamètre équivalent du réacteur exprimé en mètres et µ représente la viscosité du milieu réactionnel (en Pa.s ou kg.m⁻¹.s⁻¹).

La vitesse de déplacement du milieu réactionnel en fût vide V se calcule à partir de la mesure du débit volumique du milieu réactionnel et de la section du réacteur selon la formule : V = Q/S, où Q représente le débit volumique du milieu réactionnel, exprimé en m³.s⁻¹, et S représente la section du fût vide exprimée en m².

Par « diamètre équivalent », on entend la dimension interne du réacteur mesurée perpendiculairement à la direction de l'écoulement net.

Le nombre de Reynolds relatif Reᵣ, représente les forces d'inertie par rapport aux forces de viscosité à l'intérieur du réacteur, indépendamment de l'écoulement net.

Lorsque l'agitation est générée par un agitateur mécanique, on applique alors la formule : ${Re}_{r} = mv . N . {d}^{2} / μ$ dans laquelle mv représente la masse volumique du milieu réactionnel (en kg.m⁻³), N représente la vitesse de rotation de l'agitateur (en tr.s⁻¹), d représente le diamètre de l'agitateur (en m) et µ représente la viscosité du milieu réactionnel (en Pa.s ou kg.m⁻¹.s⁻¹).

Lorsque l'agitation est générée par un mouvement oscillatoire du milieu réactionnel d'amplitude A (en m) et de fréquence f (en s⁻¹), on applique alors la formule : ${Re}_{r} = mv . f . {A}^{2} / μ$ dans laquelle mv représente la masse volumique du milieu réactionnel (en kg.m⁻³), f représente la fréquence de l'oscillation (en s⁻¹), A représente l'amplitude de l'oscillation (en m) et µ représente la viscosité du milieu réactionnel (en Pa.s ou kg.m⁻¹.s⁻¹).

Il est possible de mettre en oeuvre plusieurs systèmes d'agitation, en combinant par exemple un ou plusieurs systèmes d'agitation mécanique avec un ou plusieurs systèmes oscillatoires. Dans de tels cas, il est préférable, voire nécessaire, que le nombre de Reynolds relatif Reᵣ de chacun des systèmes d'agitation, pris séparément, soit compris dans la plage de valeurs définie précédemment, c'est-à-dire entre 40 et 50000, de préférence compris entre 40 et 25000, de préférence encore entre 70 et 5000, typiquement entre 100 et 2000, bornes incluses.

On préfère cependant, pour le procédé de la présente invention, un seul type de système d'agitation, soit mécanique, soit oscillatoire. De préférence encore le procédé de la présente invention ne comprend qu'un seul système d'agitation, soit mécanique, soit oscillatoire. Selon un mode de réalisation préféré, le procédé de l'invention comporte un seul système d'agitation mécanique. Selon un autre mode de réalisation préféré, le procédé de l'invention comporte un seul système d'agitation générée par un mouvement oscillatoire.

Les masses volumiques et les viscosités du milieu réactionnel correspondent aux masses volumiques et viscosités mesurées sur la composition à l'entrée du réacteur.

La formation, et notamment la formation rapide, plus spécifiquement la formation rapide et avec un haut niveau de pureté, des cristaux de zéolithe est particulièrement délicate et nécessite à la fois une agitation locale suffisante (turbulence), pour favoriser un transfert adéquat de matière à l'interface solide/liquide de cristallisation permettant une cristallisation optimale, et également une agitation suffisamment douce, pour ne pas disloquer les cristaux en cours de formation ou perturber la bonne organisation des espèces réactives à l'interface.

Si ces conditions de cristallisation sont aujourd'hui parfaitement bien contrôlées et maîtrisées pour des préparations en mode « batch », il s'avère difficile de combiner ces deux types d'agitation en continu sans observer des phénomènes de dépôt, colmatage, voire bouchage de l'appareillage, sans parler de la qualité des cristaux de zéolithe obtenus, et ce, d'autant plus que les temps de cristallisation, et encombrement des équipements et appareillages de synthèse doivent rester compatibles avec une exploitation industrielle économique.

Afin d'éviter ces phénomènes d'encrassement, tout en conservant une excellente qualité de cristaux de zéolithe formés, la Demanderesse a maintenant découvert les conditions optimales d'agitation lors de la préparation en continu de cristaux de zéolithe, conditions qui sont caractérisées par le type d'écoulement à appliquer au fluide globalement (nombre de Reynolds net, corrélé à la vitesse nette, donc au temps de séjour pour un type de réacteur donné) et localement (nombre de Reynolds relatif).

Ainsi, et selon un mode de réalisation préféré de la présente invention, la différence entre le nombre de Reynolds relatif Reᵣ et le nombre de Reynolds net Reₙ (c'est-à-dire la différence Reᵣ - Reₙ) est strictement supérieure à 50, de préférence strictement supérieure à 100, de préférence encore strictement supérieure à 150, et de manière tout à fait préférée strictement supérieure à 180.

Ainsi le procédé de la présente invention permet de proposer un procédé industriel qui bénéficie des avantages de la synthèse en continu par rapport à des synthèses « en batch » usuels, tels que meilleur contrôle de la température, compacité des installations, régularité de production, mais aussi et surtout qui possède l'avantage de limiter l'encrassement des installations.

La composition susceptible de générer des cristaux de zéolithe peut être tout type de composition bien connue de l'homme du métier selon le type de zéolithe à préparer et comprend typiquement au moins une source de silice et au moins une source d'alumine et/ou tout autre source d'élément(s) pouvant constituer une charpente zéolithique, par exemple source de phosphore, de titane, de zirconium, et autre. À cette composition peut être ajoutée éventuellement, mais de préférence, au moins une solution aqueuse d'hydroxyde de métal alcalin ou alcalino-terreux, de préférence de métal alcalin, typiquement de sodium et/ou encore des agents structurants organiques (« structuredirecting agent » ou « template » en langue anglaise).

Par source de silice, on entend toute source bien connue de l'homme du métier et notamment une solution, de préférence aqueuse, de silicate, en particulier de silicate de métal alcalin ou alcalino-terreux, par exemple de sodium, ou de silice colloïdale.

Par source d'alumine, on entend toute source d'alumine bien connue de l'homme du métier et notamment une solution, de préférence aqueuse, d'aluminate, en particulier d'aluminate de métal alcalin ou alcalino-terreux, par exemple de sodium.

Les concentrations des diverses solutions de silice et d'alumine sont adaptées selon la nature de la source de silice, de la source d'alumine, des proportions respectives des sources d'alumine et de silice auxquelles sont ajoutées la solution d'hydroxyde de métal alcalin ou alcalino-terreux et/ou un ou plusieurs agents structurants organiques, selon les connaissances de l'homme du métier. On trouvera notamment des informations sur la nature chimique des agents structurants organiques à éventuellement utiliser en fonction de la zéolithe à synthétiser sur le site de l'« International Zeolite Association » (www.iza-online.org), par exemple et de manière non exhaustive du tétraméthylammonium (TMA), du tétra-n-propylammonium (TPA), du méthyltriéthylammonium (MTEA).

Les concentrations et proportions respectives des diverses solutions de silice et d'alumine sont connues de l'homme du métier ou peuvent être facilement adaptées par l'homme du métier selon la nature de la zéolithe que l'on souhaite préparer, à partir de données de la littérature.

Selon un mode de réalisation préféré, le procédé de la présente invention permet la préparation de tout type de zéolithes connues de l'homme du métier et par exemple, et de manière non limitative, toute zéolithe de type MFI, et notamment la silicalite, toute zéolithe de type MOR, de type OFF, de type MAZ, de type CHA et de type HEU, toute zéolithe de type FAU, et notamment zéolithe Y, zéolithe X, zéolithe MSX, zéolithe LSX, toute zéolithe de type EMT ou encore toute zéolithe de type LTA, c'est-à-dire zéolithe A ; ainsi que les autres zéotypes, tels que par exemple les titanosilicalites.

Par zéolite MSX (Medium Silica X), on entend une zéolite de type FAU présentant un ratio atomique Si/Al compris entre environ 1,05 et environ 1,15, bornes incluses. Par zéolite LSX (Low Silica X), on entend une zéolite de type FAU présentant un ratio atomique Si/Al égal à environ 1.

Le procédé selon l'invention est particulièrement adapté à la préparation de zéolithes choisies parmi les zéolithes de type MFI, et notamment la silicalite, de type FAU, et notamment zéolithe Y, zéolithe X, zéolithe MSX, zéolithe LSX, et de type LTA, c'est-à-dire de zéolithe A, ainsi que les zéolithes de type CHA et les zéolithes de type HEU.

Le procédé selon l'invention est en outre tout particulièrement adapté à la préparation de toute zéolithe de type FAU, et notamment zéolithe X, zéolithe MSX, zéolithe LSX. Les zéolithes de type MFI, et notamment la silicalite, peuvent également être très avantageusement préparées selon le procédé de l'invention.

En outre, le procédé de préparation en continu de la présente invention ne se limite pas à la préparation des zéolithes décrites ci-dessus, mais inclut également les zéolithes correspondantes à porosité hiérarchisée. Les zéolithes à porosité hiérarchisée sont des solides comportant un réseau microporeux lié à un réseau de mésopores, et permettent ainsi de concilier les propriétés d'accessibilité aux sites actifs des zéolithes mésoporeuses connues de l'art antérieur et celles de cristallinité et de microporosité maximales des zéolites dites « classiques » (sans mésoporosité). Dans ce cas, des agents structurants spécifiques sont introduits dans le milieu de synthèse, par exemple des agents structurants de type organosilanes tels que décrits dans le document FR 1 357 762.

Plus précisément, la présente invention décrit un procédé de préparation de cristaux de zéolithe comprenant au moins les étapes suivantes :
1) préparation en continu d'une composition susceptible de générer des cristaux de zéolithe, pour obtenir un milieu de synthèse,
2) ajout de semence dans le milieu de synthèse obtenu à l'étape 1),
3) conduite en continu et sous agitation de la réaction de formation des cristaux de zéolithe, selon les étapes a), b) et c) définies ci-dessus,
4) filtration du milieu réactionnel pour récupérer les cristaux produits, et
5) éventuellement recyclage des eaux-mères.

Le procédé de l'invention est particulièrement performant en termes énergétiques. Par ailleurs le procédé peut être mis en œuvre avec des installations compactes et en particulier beaucoup moins encombrantes que les installations connues de l'homme du métier pour la préparation de zéolithes en mode batch.

Le milieu de synthèse de l'étape 1) est préparé comme décrit précédemment par mélange des sources de silice et d'alumine en milieu basique. Ce mélange est avantageusement réalisé dans un mélangeur cisaillant du type « rotor-stator », c'est-à-dire un mélangeur cisaillant comprenant un rotor tournant à haute vitesse et qui fait passer le mélange au travers d'un stator dont la géométrie peut varier.

Le niveau de cisaillement est défini par le taux de cisaillement γ en s⁻¹ qui est égal à la vitesse périphérique du rotor divisé par l'épaisseur de l'entrefer entre le rotor et le stator. La vitesse périphérique Vₚ se calcule à partir de la vitesse de rotation Vᵣ et du diamètre du rotor d selon la relation : Vₚ = Vᵣ π dᵣ (exprimée en m.s⁻¹), où Vᵣ est la vitesse de rotation exprimée en tr.s⁻¹, dᵣ est le diamètre du rotor (exprimé en m) et γ est égal à Vₚ / e, où e représente l'écartement de l'entrefer entre le rotor et le stator (exprimé en m).

Le taux de cisaillement généralement appliqué est compris entre 10 000 s⁻¹ et 200 000 s⁻¹, de préférence entre 10 000 s⁻¹ et 100 000 s⁻¹.

L'ajout de semence dans le milieu de synthèse permet d'obtenir des durées de cristallisation suffisamment courtes pour être compatibles avec les contraintes d'un procédé continu. Cet ajout de semence peut être effectué par tout moyen connu de l'homme du métier et par exemple à l'aide d'un mélangeur statique ce qui a pour avantage de favoriser l'homogénéisation du mélange milieu de synthèse/semence. Par semence (appelée aussi « agent d'ensemencement ») on entend un solide ou un liquide qui favorise l'orientation de la synthèse vers la zéolithe souhaitée.

La formation des cristaux de zéolithe (cristallisation) est réalisée, comme indiqué précédemment sous agitation dans des conditions d'écoulement caractérisé par un nombre de Reynolds relatif Reᵣ compris entre 40 et 50 000, de préférence compris entre 40 et 25 000, de préférence encore entre 70 et 5 000, typiquement entre 100 et 2 000, bornes incluses. En outre, cette étape de cristallisation est avantageusement effectuée à haute température, typiquement à une température comprise entre 60°C et 200°C, de préférence entre 80°C et 160°C.

Dans un mode de réalisation tout particulièrement préféré, l'étape de formation des cristaux de zéolithe (cristallisation, étape c) décrite plus haut) s'effectue dans un réacteur tubulaire et peut être réalisée sous pression, par exemple sous pression autogène, sous pression atmosphérique, ou plus généralement sous toute pression, typiquement entre la pression atmosphérique et 1,5 MPa.

Après l'étape de cristallisation, les cristaux obtenus sont débarrassés des eaux-mères, par exemple par filtration, centrifugation, et autres techniques bien connues de l'homme du métier.

Il est possible, et ceci représente un mode de réalisation préféré de la présente invention, de prévoir un recyclage de tout ou partie des eaux-mères, c'est-à-dire des eaux de synthèse collectées après élimination, par exemple par filtration, du solide obtenu, en sortie du réacteur continu. Avant d'être recyclées, les eaux-mères peuvent avoir subi ou non un ou plusieurs traitements choisis parmi l'ultra-filtration, la reconcentration ou la distillation.

Le recyclage des eaux-mères présente de nombreux avantages, et notamment permet d'économiser de la matière première et de récupérer des calories. Ainsi le recyclage des eaux-mères permet entre autres de réduire la consommation d'énergie globale du procédé de synthèse, la quantité de solution basique (par exemple hydroxyde de sodium) utilisée, etc.

Les cristaux obtenus à l'issue de l'étape 4) sont éventuellement soumis à un ou plusieurs traitements bien connus de l'homme du métier, tels que lavage, échange cationique, séchage, imprégnation, activation, et autres, ce ou ces traitements pouvant être effectués en batch ou en continu, avantageusement en continu.

Le lavage est typiquement un lavage à l'eau afin de permettre l'élimination des eaux-mères résiduelles qui pourraient encore être présentes.

Le séchage peut être effectué à toute température et typiquement à une température comprise entre 40°C et 150°C, pendant une durée pouvant varier entre quelques minutes et quelques heures, typiquement entre quelques minutes et 10 heures. L'opération de séchage à une température inférieure à 40°C pourrait s'avérer beaucoup plus longue et ainsi peu rentable économiquement, tandis qu'une température de séchage supérieure à 150°C pourrait conduire à une détérioration plus ou moins importante des cristaux de zéolithe encore humides.

L'activation des cristaux de zéolithe, qui sont de préférence précédemment séchés, est de manière conventionnelle réalisée à une température comprise entre 150°C et 800°C, pendant une durée variant de quelques minutes à quelques heures, et typiquement de quelques minutes à 10 heures.

Le dispositif de synthèse permettant d'opérer le procédé de la présente invention peut comprendre, dans un mode de réalisation amélioré, tous moyens appropriés pour améliorer le transfert de chaleur, le transport de matière, et autres, au sein du mélange réactionnel dans tout ou partie du procédé, par exemple par ajouts de source(s) d'ultrasons et/ou de micro-ondes, pour ne citer que quelques moyens parmi ceux bien connus de l'homme du métier.

Dans un mode de réalisation particulièrement avantageux, le procédé de l'invention comprend l'ajout, en une ou plusieurs fois, avant, après ou pendant l'étape de cristallisation, d'un ou plusieurs agents d'ensemencement. Cet ajout d'agent(s) d'ensemencement permet notamment d'accélérer sensiblement l'étape de cristallisation.

Par agent d'ensemencement (ou semence), on entend une solution ou une suspension, sous forme liquide ou sous forme de gel, d'un solide ou d'un liquide qui favorise l'orientation de la synthèse vers la zéolithe souhaitée. Les agents d'ensemencement sont bien connus de l'homme du métier et sont par exemple choisis parmi les gels de nucléation, les cristaux de zéolithe, les particules minérales de toute nature, ainsi que leurs mélanges.

Selon un aspect préféré, l'agent d'ensemencement est un gel de nucléation et de préférence encore, ledit gel de nucléation comprend un mélange homogène d'une source de silice (par exemple du silicate de sodium), une source d'alumine (par exemple alumine trihydratée), éventuellement mais avantageusement une base minérale forte, telle que par exemple l'hydroxyde de sodium, de potassium, ou de calcium pour ne citer que les principales et les plus communément utilisées, et de l'eau. Un ou plusieurs agents structurants, typiquement agents structurants organiques, peuvent aussi éventuellement être introduits dans le gel de nucléation.

Comme indiqué précédemment, le procédé de synthèse selon la présente invention comprend une étape de cristallisation en continu qui est opérée dans au moins une zone réactionnelle de cristallisation soumise à des moyens d'agitation, conférant à la dite composition un écoulement caractérisé par un nombre de Reynolds relatif (Reᵣ) tel que défini ci-dessus.

Les moyens d'agitation peuvent être de tout type bien connu de l'homme du métier, et par exemple et de manière non limitative, lorsque le réacteur est un réacteur tubulaire adapté pour être opéré en continu, ce réacteur tubulaire peut être muni de restrictions (telles que anneaux, chicanes et autres), peut être équipé d'un système d'agitation, d'un système oscillant ou pulsatoire (permettant de générer un mouvement de va-et-vient du milieu réactionnel au moyen par exemple de piston, membrane), ainsi que deux ou plusieurs de ces techniques combinées.

Dans un mode de réalisation préféré de l'invention, le procédé est mis en oeuvre dans un réacteur tubulaire, éventuellement mais de préférence muni de restrictions et équipé d'un système permettant de conférer au fluide circulant dans le réacteur des pulsations, comme par exemple décrit dans la demande US 2009/0304890 de la société NiTech. D'autres systèmes permettant d'obtenir au moins une zone réactionnelle dans laquelle l'écoulement est caractérisé par un nombre de Reynolds relatif (Reᵣ) tel que défini ci-dessus, peuvent également convenir au procédé de la présente invention.

Ainsi, et selon un mode de réalisation tout particulièrement adapté, le procédé de synthèse selon la présente invention est un procédé en continu opéré dans un réacteur tubulaire muni de systèmes internes de restrictions et d'un dispositif pulsatoire, et exploité dans des conditions particulières, à savoir :
- une amplitude d'oscillation du dispositif pulsatoire comprise entre 20 mm et 400 mm, de préférence entre 25 mm et 300 mm, de préférence encore entre 30 mm et 200 mm, et
- une fréquence d'oscillation comprise entre 0,1 Hz et 2 Hz, de préférence entre 0,15 Hz et 1,5 Hz, de préférence encore entre 0,4 Hz et 1 Hz.

L'amplitude d'oscillation peut néanmoins varier dans de grandes proportions, et de manière préférée, l'amplitude est comprise entre 0,5D et 3D, de préférence entre D et 2D, où D est le diamètre équivalent du réacteur, comme défini précédemment. De même, et en présence de restrictions au sein du réacteur tubulaire, lesdites restrictions sont de préférence espacées d'une distance variant entre 0,5D et 3D, de préférence entre D et 2D.

Il a en effet été remarqué que, pour éviter l'encrassement ou tout au moins éviter un encrassement trop rapide du réacteur, il est important, voire nécessaire, de générer des turbulences locales au sein du réacteur, via des mouvements d'oscillation appliqués au milieu de synthèse, oscillations dont l'amplitude doit être supérieure à 20 mm, et de préférence comprises entre 20 mm et 400 mm, comme indiqué ci-dessus.

En outre, ce système par pulsations, ou encore système oscillatoire, peut être avantageusement couplé à des restrictions disposées dans tout ou partie du réacteur. Selon un mode de réalisation ces restrictions sont présentes tout au long du réacteur tubulaire sous la forme d'anneaux, chicanes, et autres.

Le couplage de ces restrictions avec les oscillations appropriées (dont l'amplitude et la fréquence peuvent varier), appliqué au milieu réactionnel dans le réacteur tubulaire, permet de générer un écoulement caractérisé par un nombre de Reynolds relatif Reᵣ compris dans la gamme de valeurs définie précédemment.

Les oscillations imposées au milieu réactionnel, accompagnées avantageusement de la présence des restrictions dans le réacteur, permettent de générer une agitation optimale à la fois axiale et radiale. Cette agitation est non seulement nécessaire pour une formation optimale des cristaux de zéolithe, mais permet également d'intensifier les échanges de matière au sein du milieu réactionnel. Comme autre avantage, cette agitation améliore également l'efficacité des échanges thermiques.

Il a ainsi été observé que l'amplitude d'oscillation doit être suffisante pour permettre aux solides présents dans le réacteur tubulaire de progresser dans le tube de manière régulière, en franchissant les restrictions. Une amplitude trop basse peut entraîner un encrassement, alors qu'une amplitude trop haute peut porter atteinte à la qualité de la cristallisation. Il ressort que la fréquence d'oscillation doit être maintenue dans la fourchette appropriée et définie précédemment, pour ne pas encourir les effets décrits ci-dessus (encrassement ou mauvaise qualité de cristallisation). L'amplitude est de préférence au moins égale à la distance entre deux restrictions. Ainsi, le réacteur dans son ensemble peut ainsi être considéré comme une cascade de réacteurs parfaitement agités, un réacteur étant matérialisé par l'espace compris entre deux restrictions.

Un autre avantage lié au procédé de la présente invention est que la modification de la fréquence d'oscillation permet de faire varier la taille des cristaux obtenus. En effet, il est possible de diminuer la taille des cristaux en augmentant la fréquence de l'oscillateur et inversement d'augmenter la taille des cristaux en diminuant la fréquence de l'oscillateur.

Le procédé selon la présente invention permet généralement la synthèse de cristaux de zéolithe de granulométrie (diamètre moyen en nombre déterminé par comptage sur clichés MEB) pouvant aller de 0,1 µm à 20 µm, et de préférence pouvant aller de 0,2 µm à 10 µm, et de préférence encore de 0,3 µm à 8 µm, de manière tout à fait préférée de 0,3 µm à 5 µm. Le procédé de la présente invention permet notamment de synthétiser des cristaux de zéolithe présentant une pureté égale ou supérieure à 98%, et de préférence comprise entre 98% et 100%.

Au sein du réacteur comprenant au moins une zone agitée où sont formés en continu les cristaux, le gel de départ et les cristaux formés sont soumis à un écoulement afin de faire progresser le gel de départ le long du réacteur et ainsi permettre l'expulsion des cristaux formés en sortie de réacteur. Comme indiqué précédemment, les cristaux formés en continu sont récupérés en sortie du réacteur selon un écoulement caractérisé par le nombre de Reynolds net (Reₙ) défini plus haut, et qui correspond à un écoulement qui peut être qualifié d'écoulement laminaire.

Ainsi, pour atteindre le nombre de Reynolds net (Reₙ) souhaité, divers paramètres peuvent être adaptés, tel que le diamètre équivalent du réacteur tubulaire, et la vitesse d'écoulement nette. Un nombre de Reynolds net trop élevé est susceptible de perturber la cristallisation, par exemple en empêchant la cristallisation ou en créant des phases cristallines autres que celle souhaitée. Un nombre de Reynolds net trop faible peut entraîner un risque d'encrassement du réacteur en continu.

Le contrôle du débit de matières premières à l'entrée du réacteur et/ou de la production de cristaux en sortie de réacteur peut être obtenu selon tout moyen connu de l'homme du métier et par exemple au moyen de pompes, éventuellement associées à des régulateurs de débit.

Il a ainsi été montré par exemple qu'il est possible de fonctionner sans encrassement lorsque l'on utilise un réacteur tubulaire muni d'un système d'oscillation permettant d'atteindre le nombre de Reynolds relatif tel que défini précédemment, un système de pompes permettant d'atteindre un nombre de Reynolds net tel que défini précédemment.

Un temps de séjour de 90 minutes permet d'obtenir des cristaux de zéolithe de pureté supérieure à 95%, voire supérieure à 98% dans un réacteur de longueur typiquement comprise entre 1 m et 100 m et un diamètre typiquement compris entre 0,5 cm et 30 cm. La cristallinité est déterminée par diffraction des rayons X (DRX).

En opérant avec un réacteur comme défini dans la demande de brevet US 2009/0304890 de la société NiTech et dans les conditions opératoires du procédé de la présente invention, aucun encrassement n'a pu être observé après 24 heures de fonctionnement continu pour la préparation de zéolithe de type X.

En outre il a été possible de diminuer la taille des cristaux en accélérant la fréquence de l'oscillateur.

Les exemples suivants permettent d'illustrer la présente invention sans pour autant apporter un quelconque caractère limitatif à la portée de la protection recherchée qui est définie au moyen des revendications annexées.

### Techniques de caractérisation

### Analyse qualitative et quantitative par diffraction des rayons X (DRX)

La pureté des cristaux de zéolithe synthétisés est évaluée par analyse de diffraction aux rayons X, connue de l'homme du métier sous l'acronyme DRX. Cette identification est réalisée sur un appareil DRX de la marque Bruker.

Cette analyse permet d'identifier les différentes zéolithes présentes dans le matériau adsorbant car chacune des zéolithes possède un diffractogramme unique défini par le positionnement des pics de diffraction et par leurs intensités relatives.

Les cristaux de zéolithe sont broyés puis étalés et lissés sur un porte échantillon par simple compression mécanique.

Les conditions d'acquisition du diffractogramme réalisé sur l'appareil D5000 Bruker sont les suivantes :
- tube Cu utilisé à 40 kV - 30 mA ;
- taille des fentes (divergentes, de diffusion et d'analyse) = 0,6 mm ;
- filtre : Ni ;
- dispositif d'échantillon tournant : 15 tr.min⁻¹ ;
- plage de mesure : 3° < 2θ < 50° ;
- pas : 0,02° ;
- temps de comptage par pas : 2 secondes.

L'interprétation du diffractogramme obtenu s'effectue avec le logiciel EVA avec identification des zéolithes à l'aide de la base ICDD PDF-2, release 2011.

La quantité de cristaux, en poids, est déterminée par analyse par DRX, cette méthode est également utilisée pour mesurer la quantité des phases non cristallines. Cette analyse est réalisée sur un appareil de la marque Bruker, puis la quantité en poids des cristaux de zéolithe est évaluée au moyen du logiciel TOPAS de la société Bruker. La pureté est exprimée en pourcentage massique de phase cristalline recherchée par rapport au poids total de l'échantillon.

### Exemple 1 (selon l'invention) : Synthèse zéolite A en continu

La synthèse en continu de zéolite A consiste à alimenter un réacteur tubulaire (diamètre interne = 1,5 cm et longueur 20 m) avec un milieu de synthèse défini plus loin auquel on ajoute 1% en poids de gel de nucléation explicité ci-après.

Le gel de nucléation est préparé en ajoutant une solution de silicate de sodium à 35°C dans une solution d'aluminate de sodium à 35°C de façon à obtenir un gel de composition : 2,66 Na₂O / Al₂O₃ / 1,92 SiO₂ / 65 H₂O.

La solution d'aluminate de sodium est préparée par dissolution de l'alumine dans une solution d'hydroxyde de sodium à ébullition puis refroidissement à 35°C. Cette solution contient 938,7 g d'alumine, 1539,0 g de solution aqueuse d'hydroxyde de sodium à 50 % en poids et 1542,6 g d'eau.

La solution de silicate de sodium est préparée en mélangeant 2601 g de silicate de sodium avec 486 g de solution aqueuse d'hydroxyde de sodium à 50 % en poids et 2160 g d'eau, puis mise en température à 35°C.

Le gel de nucléation est conservé pendant 2 heures à 35°C et ensuite refroidi à 25°C et stockée pendant 20 heures à 25°C. Cette solution peut ensuite être utilisée comme semence dans la synthèse de zéolite A en l'ajoutant en continu dans le milieu de synthèse avec une teneur égale à 1 % en poids par rapport au poids de milieu de synthèse.

Le milieu de synthèse est préparé à l'aide d'un mélangeur cisaillant de type rotor/stator dont le diamètre du rotor est de 38,1 mm et l'écartement de l'entrefer entre le rotor et le stator est de 0,2 mm. On mélange simultanément une solution d'aluminate de sodium à 35°C et une solution de silicate de sodium à 35°C de façon à obtenir un gel de composition : 3,5 Na₂O / Al₂O₃ / 2,0 SiO₂ / 175 H₂O.

La solution d'aluminate de sodium est préparée par dissolution de l'alumine dans une solution d'hydroxyde de sodium à ébullition puis refroidissement à 35°C. Cette solution contient 31824 g d'alumine, 86402 g de solution aqueuse d'hydroxyde de sodium à 50 % en poids et 273600 g d'eau.

La solution de silicate de sodium est préparée en mélangeant 91152 g de silicate de sodium avec 8641 g de solution aqueuse d'hydroxyde de sodium à 50 % en poids et 254880 g d'eau, puis mise en température à 35°C.

Pour préparer le milieu de synthèse, on alimente simultanément la chambre du mélangeur en ligne cisaillant Silverson à l'aide de deux pompes péristaltiques : le débit de la solution d'aluminate est égal à 220,5 g.min⁻¹ et celui de la solution de silicate est égal à 211,5 g.min⁻¹. Les tuyaux d'alimentation sont au préalable remplis avec de l'eau.

Le mélange s'effectue avec une vitesse de rotor de 5500 tr.min⁻¹, ce qui correspond à un taux de cisaillement de 54800 s⁻¹. Le milieu de synthèse alimente en continu le mélangeur statique dans lequel on introduit le gel de nucléation à 25°C avec un débit de 4,32 g.min⁻¹ (1 % en poids du milieu de synthèse).

Le flux qui sort du mélangeur statique constitué du mélange du milieu de synthèse et du gel de nucléation a une masse volumique de 1200 kg.m⁻³ et une viscosité de 5 mPa.s. Une fraction massique de 1/9 de ce flux alimente directement le réacteur tubulaire à pulsation.

Le réacteur tubulaire à pulsation est initialement mis en température en mettant en fonctionnement l'oscillateur (amplitude 50 mm et fréquence 0,4 Hz). On fait d'abord circuler de l'eau en réglant la température du bain d'huile à 108°C de façon à obtenir une température à l'intérieur de 100°C. On alimente ensuite le pilote avec le mélange du milieu de synthèse et du gel de nucléation réalisé à l'aide d'un mélangeur statique en inox 316 de 125 mm de longueur avec 17 éléments vendu par Fisher Scientific (référence 1174-4119) en maintenant une oscillation d'amplitude 50 mm et de fréquence 0,4 Hz. Avec ces conditions opératoires, le nombre de Reynolds net (Reₙ) est égal à 13,7 et le nombre de Reynolds relatif (Reᵣ) est égal à 240.

Après 24 heures de fonctionnement en continu, on ne constate pas, sur l'indication du manomètre de pression installé à l'entrée du réacteur tubulaire, de montée en pression dans l'installation. Le débit d'alimentation de 2,4 L.h⁻¹ permet d'obtenir un temps de séjour dans le réacteur tubulaire de 90 minutes, temps de séjour suffisant pour obtenir une zéolite LTA cristallisée. Le milieu réactionnel prélevé en sortie du tube est filtré puis lavé avec de l'eau jusqu'à pH neutre puis séché à 80°C et activé à 550°C.

Pour vidanger l'installation, on fait circuler de l'eau froide avec un débit de 60 L.h⁻¹ pendant 1 heure. Les cristaux de zéolithe LTA obtenus présentent une cristallinité de 99%.

### Exemple 2 (comparatif) : Synthèse zéolite A en continu

Lorsqu'on effectue la synthèse en continu selon les conditions opératoires de l'exemple 1, mais en diminuant l'amplitude de l'oscillateur à 20 mm, alors on observe, sur l'indication du manomètre de pression installé à l'entrée du réacteur tubulaire, des montées en pression après seulement 2 heures de fonctionnement, et qui conduisent à un bouchage de l'installation après 3 heures et 15 minutes de synthèse. Avec ces conditions opératoires, le nombre de Reynolds net est égal à 13,7 et le nombre de Reynolds relatif est égal à 38.

### Exemple 3 (selon l'invention) : Synthèse de zéolite X en continu

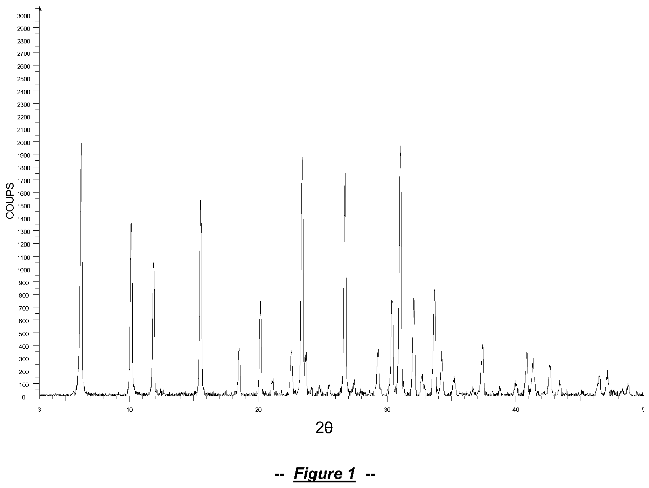

En reproduisant les conditions opératoires de l'exemple 1, et en modifiant la nature de la composition du milieu réactionnel de départ, on réalise une synthèse de zéolite de type faujasite X en continu pendant 24 heures. Les cristaux de zéolithe X obtenus à la sortie du réacteur tubulaire présentent une cristallinité de 99%. Le diffractogramme de ces cristaux est présenté en Figure 1.

## Revendications

1. Procédé de préparation de cristaux de zéolithe en continu, comprenant au moins les étapes suivantes :
a) fourniture en continu d'une composition susceptible de générer des cristaux de zéolithe ;
b) introduction en continu de ladite composition dans au moins une zone réactionnelle de cristallisation soumise à des moyens d'agitation, conférant à la dite composition un écoulement **caractérisé par** un nombre de Reynolds relatif Reᵣ compris entre 40 et 50000, de préférence compris entre 40 et 25000, de préférence encore entre 70 et 5000, typiquement entre 100 et 2000, bornes incluses,
c) récupération en continu des cristaux formés à l'étape b) selon un écoulement **caractérisé par** un nombre de Reynolds net Reₙ compris entre 1 et 1500, de préférence entre 1 et 1000, de préférence encore entre 5 et 500, typiquement entre 10 et 200, bornes incluses, procédé dans lequel :
- le nombre de Reynolds net Reₙ est calculé en utilisant la formule : ${Re}_{n} = mv . V . D / μ ,$ où mv représente la masse volumique du milieu réactionnel en kg.m⁻³, V représente la vitesse de déplacement du milieu réactionnel en fût vide exprimée en m.s⁻¹, D représente le diamètre équivalent du réacteur exprimé en mètres et µ représente la viscosité du milieu réactionnel en Pa.s, et
- le nombre de Reynolds relatif Reᵣ, lorsque l'agitation est générée par un agitateur mécanique, est calculé selon la formule suivante : ${Re}_{r} = mv . N . {d}^{2} / μ$ dans laquelle mv représente la masse volumique du milieu réactionnel en kg.m⁻³, N représente la vitesse de rotation de l'agitateur en tr.s⁻¹, d représente le diamètre de l'agitateur en m et µ représente la viscosité du milieu réactionnel en Pa.s, et lorsque l'agitation est générée par un mouvement oscillatoire du milieu réactionnel d'amplitude A en m et de fréquence f en s⁻¹, selon la formule suivante : ${Re}_{r} = mv . f . {A}^{2} / μ$ dans laquelle mv représente la masse volumique du milieu réactionnel en kg.m⁻³, f représente la fréquence de l'oscillation en s⁻¹, A représente l'amplitude de l'oscillation en m et µ représente la viscosité du milieu réactionnel en Pa.s.

2. Procédé selon la revendication 1, dans lequel la différence entre le nombre de Reynolds relatif Reᵣ et le nombre de Reynolds net Reₙ est strictement supérieure à 50, de préférence strictement supérieure à 100, de préférence encore strictement supérieure à 150, et de manière tout à fait préférée strictement supérieure à 180.

3. Procédé selon la revendication 1 ou la revendication 2, de préparation de cristaux de toute zéolithe de type MFI, et notamment la silicalite, toute zéolithe de type MOR, de type OFF, de type MAZ, de type CHA et de type HEU, toute zéolithe de type FAU, et notamment zéolithe Y, zéolithe X, zéolithe MSX, zéolithe LSX, toute zéolithe de type EMT ou encore toute zéolithe de type LTA, c'est-à-dire zéolithe A ; ainsi que les autres zéotypes.

4. Procédé selon la revendication 3, de préparation de cristaux de zéolithe, où la zéolithe est choisie parmi les zéolithes de type MFI, et notamment la silicalite, de type FAU, et notamment zéolithe Y, zéolithe X, zéolithe MSX, zéolithe LSX, et de type LTA, c'est-à-dire de zéolithe A, ainsi que les zéolithes de type CHA et les zéolithes de type HEU.

5. Procédé selon l'une quelconque des revendications précédentes, comprenant au moins les étapes suivantes :
1) préparation en continu d'une composition susceptible de générer des cristaux de zéolithe, pour obtenir un milieu de synthèse,
2) ajout de semence dans le milieu de synthèse obtenu à l'étape 1),
3) conduite en continu et sous agitation de la réaction de formation des cristaux de zéolithe, selon les étapes a), b) et c) selon la revendication 1,
4) filtration en continu pour séparer des eaux-mères les cristaux obtenus, et
5) éventuellement recyclage des eaux-mères.

6. Procédé selon l'une quelconque des revendications précédentes, dans lequel l'étape de cristallisation est effectuée à une température comprise entre 60°C et 200°C, de préférence entre 80°C et 160°C.

7. Procédé selon l'une quelconque des revendications précédentes, comprenant en outre l'ajout, en une ou plusieurs fois, avant, après ou pendant l'étape de cristallisation, d'un ou plusieurs agents d'ensemencement.

8. Procédé selon la revendication 7, dans lequel l'agent d'ensemencement est choisi parmi un gel de nucléation, un cristal, une particule minérale de toute nature, ainsi que leurs mélanges.

9. Procédé selon l'une quelconque des revendications précédentes, lequel procédé es mis en oeuvre dans un réacteur tubulaire éventuellement muni de restrictions, et équipé d'un système d'agitation, d'un système oscillant ou pulsatoire.

10. Procédé selon l'une quelconque des revendications précédentes, opéré dans un réacteur tubulaire muni de systèmes internes de restrictions et d'un dispositif pulsatoire, et exploité dans des conditions particulières, à savoir :
- une amplitude d'oscillation du dispositif pulsatoire comprise entre 20 mm et 400 mm, de préférence entre 25 mm et 300 mm, de préférence encore entre 30 mm et 200 mm, et
- une fréquence d'oscillation comprise entre 0,1 Hz et 2 Hz, de préférence entre 0,15 Hz et 1,5 Hz, de préférence encore entre 0,4 Hz et 1 Hz.

## Patentansprüche

1. Kontinuierliches Verfahren zur Herstellung von Zeolithkristallen, umfassend mindestens die folgenden Schritte:
a) kontinuierliche Beschickung mit einer zur Erzeugung von Zeolithkristallen geeigneten Zusammensetzung;
b) kontinuierliches Einbringen der Zusammensetzung in mindestens eine Kristallisationsreaktionszone, die Rührmitteln ausgesetzt wird, wobei der Zusammensetzung eine Strömung verliehen wird, die durch eine relative Reynoldszahl Reᵣ zwischen 40 und 50000, vorzugsweise zwischen 40 und 25000, ebenfalls bevorzugt zwischen 70 und 5000, typischerweise zwischen 100 und 2000, einschließlich der Grenzen, gekennzeichnet ist,
c) kontinuierliche Gewinnung der in Schritt b) gebildeten Kristalle bei einer Strömung, die durch eine Netto-Reynoldszahl Reₙ zwischen 1 und 1500, vorzugsweise zwischen 1 und 1000, ebenfalls bevorzugt zwischen 5 und 500, typischerweise zwischen 10 und 200, einschließlich der Grenzen, gekennzeichnet ist, wobei bei dem Verfahren:
- die Netto-Reynoldszahl Reₙ unter Verwendung der folgenden Formel berechnet wird: ${Re}_{n} = mv . V . D / μ ,$ wobei mv die Dichte des Reaktionsmediums in kg.m⁻³ darstellt, V die Vorwärtsbewegungsgeschwindigkeit des Reaktionsmediums im leeren Behälter, ausgedrückt in m.s⁻¹, darstellt, D den Äquivalentdurchmesser des Reaktors, ausgedrückt in Metern, darstellt und µ die Viskosität des Reaktionsmediums in Pa.s darstellt, und
- die relative Reynoldszahl Reᵣ, wenn das Rühren durch einen mechanischen Rührer bewerkstelligt wird, gemäß der folgenden Formel: ${Re}_{r} = mv . N . {d}^{2} / μ ,$ wobei mv die Dichte des Reaktionsmediums in kg.m⁻³ darstellt, N die Drehzahl des Rührers in U.s⁻¹ darstellt, d den Durchmesser des Rührers in m darstellt und µ die Viskosität des Reaktionsmediums in Pa.s darstellt, und wenn das Rühren durch eine Oszillationsbewegung des Reaktionsmediums der Amplitude A in m und der Frequenz f in s⁻¹ bewerkstelligt wird, gemäß der folgenden Formel berechnet wird: ${Re}_{r} = mv . f . {A}^{2} / μ ,$ wobei mv die Dichte des Reaktionsmediums in kg.m⁻³ darstellt, f die Frequenz der Schwingung in s⁻¹ darstellt, A die Amplitude der Schwingung in m darstellt und µ die Viskosität des Reaktionsmediums in Pa.s darstellt.

2. Verfahren nach Anspruch 1, wobei die Differenz zwischen der relativen Reynoldszahl Reᵣ und der Netto-Reynoldszahl Reₙ strikt größer als 50, vorzugsweise strikt größer als 100, ebenfalls bevorzugt strikt größer als 150 und ganz besonders bevorzugt strikt größer als 180 ist.

3. Verfahren nach Anspruch 1 oder Anspruch 2 zur Herstellung von Kristallen eines beliebigen Zeolithen des MFI-Typs und insbesondere von Silicalit, eines beliebigen Zeolithen des MOR-Typs, des OFF-Typs, des MAZ-Typs, des CHA-Typs und des HEU-Typs, eines beliebigen Zeolithen des FAU-Typs und insbesondere von Zeolith Y, Zeolith X, Zeolith MSX, Zeolith LSX, eines beliebigen Zeolithen des EMT-Typs oder auch eines beliebigen Zeolithen des LTA-Typs, d. h. von Zeolith A; sowie der anderen Zeotypen.

4. Verfahren nach Anspruch 3 zur Herstellung von Zeolithkristallen, wobei der Zeolith aus Zeolithen des MFI-Typs und insbesondere Silicalit, des FAU-Typs und insbesondere Zeolith Y, Zeolith X, Zeolith MSX, Zeolith LSX und des LTA-Typs, d. h. Zeolith A, sowie Zeolithen des CHA-Typs und Zeolithen des HEU-Typs ausgewählt ist.

5. Verfahren nach einem der vorhergehenden Ansprüche, das mindestens die folgenden Schritte umfasst:
1) kontinuierliche Herstellung einer zur Erzeugung von Zeolithkristallen geeigneten Zusammensetzung, um ein Synthesemedium zu erhalten,
2) Zugabe von Impfkristallen zu dem in Schritt 1) erhaltenen Synthesemedium,
3) kontinuierliche Führung der Reaktion zur Bildung von Zeolithkristallen unter Rühren gemäß den Schritten a), b) und c) nach Anspruch 1,
4) kontinuierliche Filtration zum Abtrennen der erhaltenen Kristalle von den Mutterlaugen und
5) gegebenenfalls Wiederverwertung der Mutterlaugen.

6. Verfahren nach einem der vorhergehenden Ansprüche, wobei der Kristallisationsschritt bei einer Temperatur zwischen 60 °C und 200 °C, bevorzugt zwischen 80 °C und 160 °C, durchgeführt wird.

7. Verfahren nach einem der vorhergehenden Ansprüche, das ferner die ein- oder mehrmalige Zugabe eines oder mehrerer Impfmittel vor, nach oder während des Kristallisationsschritts umfasst.

8. Verfahren nach Anspruch 7, wobei das Impfmittel aus einem keimbildenden Gel, einem Kristall, einem anorganischen Partikel jeglicher Art sowie deren Gemischen ausgewählt ist.

9. Verfahren nach einem der vorhergehenden Ansprüche, wobei das Verfahren in einem Rohrreaktor durchgeführt wird, der gegebenenfalls mit Einschränkungen versehen und mit einem Rührsystem, einem Schwing- oder Pulsationssystem ausgestattet ist.

10. Verfahren nach einem der vorhergehenden Ansprüche, das in einem Rohrreaktor, der mit internen Einschränkungssystemen und einer Pulsationsvorrichtung ausgestattet ist, durchgeführt und unter speziellen Bedingungen betrieben wird, nämlich:
- einer Schwingungsamplitude der Pulsationsvorrichtung zwischen 20 mm und 400 mm, vorzugsweise zwischen 25 mm und 300 mm, ebenfalls bevorzugt zwischen 30 mm und 200 mm, und
- einer Schwingungsfrequenz zwischen 0,1 Hz und 2 Hz, vorzugsweise zwischen 0,15 Hz und 1,5 Hz, ebenfalls bevorzugt zwischen 0,4 Hz und 1 Hz.

## Claims

1. Process for preparing zeolite crystals continuously, comprising at least the following steps:
a) continuously supplying a composition capable of generating zeolite crystals;
b) continuously introducing said composition into at least one crystallization reaction zone subjected to stirring means, giving said composition a flow **characterized by** a relative Reynolds number Reᵣ of between 40 and 50 000, preferably between 40 and 25 000, more preferably between 70 and 5000, typically between 100 and 2000, limits included,
c) continuously recovering the crystals formed in step b) according to a flow **characterized by** a net Reynolds number Reₙ of between 1 and 1500, preferably between 1 and 1000, more preferably between 5 and 500, typically between 10 and 200, limits included, in which process:
- the net Reynolds number Reₙ is calculated using the formula: ${Re}_{n} = mv . V . D / μ ,$ where mv represents the density of the reaction medium in kg.m⁻³, V represents the velocity of travel of the reaction medium in an empty bed expressed in m.s⁻¹, D represents the equivalent diameter of the reactor expressed in metres and µ represents the viscosity of the reaction medium in Pa.s, and
- the relative Reynolds number Reᵣ, when stirring is generated by a mechanical stirrer, is calculated according to the following formula: ${Re}_{r} = mv . N . {d}^{2} / μ$ in which mv represents the density of the reaction medium in kg.m⁻³, N represents the speed of rotation of the stirrer in rev.s⁻¹, d represents the diameter of the stirrer in m and µ represents the viscosity of the reaction medium in Pa.s, and, when the stirring is generated by an oscillatory movement of the reaction medium of amplitude A in m and of frequency f in s⁻¹, according to the following formula: ${Re}_{r} = mv . f . {A}^{2} / μ$ in which mv represents the density of the reaction medium in kg.m⁻³, f represents the frequency of the oscillation in s⁻¹, A represents the amplitude of the oscillation in m and µ represents the viscosity of the reaction medium in Pa.s.

2. Process according to Claim 1, wherein the difference between the relative Reynolds number Reᵣ and the net Reynolds number Reₙ is strictly greater than 50, preferably strictly greater than 100, more preferably strictly greater than 150, and most preferably strictly greater than 180.

3. Process according to Claim 1 or Claim 2, for preparing crystals of any zeolite of MFI type, and in particular silicalite, any zeolite of MOR type, of OFF type, of MAZ type, of CHA type and of HEU type, any zeolite of FAU type, and in particular zeolite Y, zeolite X, zeolite MSX, zeolite LSX, any zeolite of EMT type or else any zeolite of LTA type, i.e. zeolite A, and also the other zeotypes.

4. Process according to Claim 3, for preparing zeolite crystals, where the zeolite is chosen from zeolites of MFI type, and in particular silicalite, of FAU type, and in particular zeolite Y, zeolite X, zeolite MSX, zeolite LSX, and of LTA type, i.e. zeolite A, and also the zeolites of CHA type and the zeolites of HEU type.

5. Process according to any one of the preceding claims, comprising at least the following steps:
1) continuously preparing a composition capable of generating zeolite crystals, in order to obtain a synthesis medium,
2) adding seed to the synthesis medium obtained in step 1),
3) continuously conducting, under stirring, the reaction for forming zeolite crystals, according to steps a), b) and c) according to Claim 1,
4) continuously filtering in order to separate the crystals obtained off from the mother liquors, and
5) optionally recycling the mother liquors.

6. Process according to any one of the preceding claims, wherein the crystallization step is carried out at a temperature of between 60°C and 200°C, preferably between 80°C and 160°C.

7. Process according to any one of the preceding claims, further comprising the addition, in one or more stages, before, after or during the crystallization step, of one or more seeding agents.

8. Process according to Claim 7, wherein the seeding agent is chosen from a nucleating gel, a crystal, a mineral particle of any nature, and also mixtures thereof.

9. Process according to any one of the preceding claims, which process is carried out in a tubular reactor optionally provided with restrictions, and equipped with a stirring system, an oscillating or pulsating system.

10. Process according to any one of the preceding claims, performed in a tubular reactor provided with internal systems of restrictions and with a pulsating device, and operated under particular conditions, namely:
- an oscillation amplitude of the pulsating device of between 20 mm and 400 mm, preferably between 25 mm and 300 mm, more preferably between 30 mm and 200 mm, and
- an oscillation frequency of between 0.1 Hz and 2 Hz, preferably between 0.15 Hz and 1.5 Hz, more preferably between 0.4 Hz and 1 Hz.
